# EUROPÄISCHE PATENTSCHRIFT

(11) **EP 3 915 447 B1**
(45) Veröffentlichungstag und Bekanntmachung des Hinweises auf die Patenterteilung: **25.12.2024**
(21) Anmeldenummer: 21170694.0
(22) Anmeldetag: 27.04.2021
(51) Int. Cl.: A47J 31/44

(54) **HEISSGETRÄNKEBEREITER MIT EINER ABLAUFVORRICHTUNG**
HOT BEVERAGE MAKER WITH A DISPENSING DEVICE
DISPOSITIF DE PRÉPARATION DE BOISSONS CHAUDES DOTÉ D'UN DISPOSITIF D'ÉVACUATION

(30) Priorität: 27.05.2020 DE 102020114147
(43) Veröffentlichungstag der Anmeldung: 01.12.2021
(73) Patentinhaber: Miele & Cie. KG, 33332 Gütersloh (DE)
(72) Erfinder: Kukla, Veronika, 33619 Bielefeld (DE)

(56) Entgegenhaltungen:
- DE-B3- 102015 208 212
- DE-U1- 202005 007 746
- US-A- 5 245 915
- US-A1- 2019 336 893

## Beschreibung

Die Erfindung betrifft einen Heißgetränkebereiter mit einem Strömungsleitungssystem mit
- einer Wasserquelle;
- einer Brüheinheit, wobei die Brüheinheit eine Brühkammer zur Aufnahme von aufzubrühender Brühsubstanz und einer Einlassleitung zum Einlassen von Brühwasser in die Brühkammer;
- eine Heizeinrichtung zum Erhitzen des der Brühkammer zugeführten Wassers;
- eine Pumpe, die dazu ausgebildet ist, das Wasser aus der Quelle zur Brühkammer zu fördern;
- eine Steuereinrichtung zur Aktivierung und Deaktivierung der genannten Aktoren zur Zubereitung eines ausgewählten Getränks;
- einer Ablaufvorrichtung, umfassend
- eine Auffangschale zum Auffangen von Flüssigkeit, welche eine Einlassöffnung umfasst. Eine derartige Heißgetränkebereiter ist aus der DE 10 2015 208 212 B3 bekannt. Auch hier kommt ein Filter zum Einsatz, der in diesem Fall jedoch unmittelbar oberhalb des Ablaufes der Auffangschale angeordnet ist und in die Auffangschale integriert wird. Bei dieser Ausführungsvariante werden also die Kaffeereste zusammen mit der Restflüssigkeit in der Auffangschale gesammelt, wobei der Filter dafür sorgt, dass die zuvor erwähnte Trennung erfolgt und das Abwasser über einen an der Auffangschale vorhandenen Ablauf abgeführt wird.

Die DE 20 2005 007 746 U1 offenbart allgemein einen Getränkebereiter mit einer Abwasserschale. Hierin ist eine Saugeinlage aus porösem Material eingesetzt, um Flüssigkeit vollständig in der Auffangschale zu binden.

Die US 5 245 915 A offenbart einen Getränkebereiter mit einer Abtropfschale, in der ein Filterelement zum Filtern des Abwassers angebracht ist.

Der Erfindung liegt somit die Aufgabe zu Grunde, einen Heißgetränkebereiter mit einer einfachen und verbesserten Auffangschale bereitzustellen.

Erfindungsgemäß wird unter anderem diese Aufgabe durch einen Heißgetränkebereiter mit den Merkmalen des unabhängigen Anspruchs 1 gelöst. Vorteilhafte Ausgestaltungen und Weiterbildungen der Erfindung ergeben sich aus den abhängigen Ansprüchen.

Ein mit der Erfindung erreichbarer Vorteil besteht darin, dass das Abwasser und Restwasser zuverlässig von Sedimenten befreit wird. Dadurch wird sichergestellt, dass, soweit vorhanden, die Ablauföffnung und der Ablaufschlauch nicht verstopft. Ferner ist es vorteilhaft, ein Ventil in der Ablauföffnung einzusetzen. Hierbei wird mit der verbesserten Filterung des Abwassers vermeiden, dass das Ventil hinsichtlich seiner Schließfunktion nicht beeinträchtigt wird. Ferner wird erreicht, dass das gesammelte Abwasser nicht so schnell schimmelt, gegenüber einem mit Sedimenten versetztem Abwasser.

Hierzu umfasst die Ablaufvorrichtung ein Filtermittel, welches ein in der Schale angebrachtes Vlies oder mehrlagiges Gewebe ist. Aufgrund der chaotischen Faserstruktur wird ein zuverlässiges Zurückhalten von Sedimenten und Körnern und andererseits eine extrem gute Durchlässigkeit für Wasser geschaffen. Damit wird erreicht, dass das Filtermittel schneller trocknet, als ein herkömmliches Sieb, auf dem Sedimente als Filterrückstände lagern. Ein weiterer Vorteil ist, dass das Filtermittel aus besagtem Vlies bzw. mehrlagigem Gewebe biegsam oder flexibel ist, sodass es einfach aus der Schale herausgenommen und abgespült werden kann.

In einer zweckmäßigen Ausführung ist die Auffangschale im unteren Bereich oder an ihrem Boden mit einer Auslassöffnung zum Abführen der aufgefangenen Flüssigkeit versehen.

In einer bevorzugten Ausführung ist das Filtermittel derart ausgebildet, dass es eine Dicke aufweist, die etwa der Tiefe der Schale entspricht. Somit wird der Innenraum der Schale nahezu oder vollständig ausgefüllt. Durch die Erstreckung in die Tiefe wird die aktive Filterschicht extrem vergrößert, ohne die vorhandene Auffangschale zu vergrößern.

In einer insgesamt zweckmäßigen Ausführung umfasst die Schale einen Boden mit Gefälle zur Auslassöffnung, um das Ablaufen des gefilterten Abwassers zu verbessern. Der Boden kann für diese und alle anderen Ausführungsformen mit einer hydrophoben Struktur versehen sein, um einen sogenannten Lotusblüten-Effekt zu erzielen.

Ferner umfasst die Ablaufvorrichtung mehrere Abstandsmittel zur Auflage des Filtermittels in der Schale, um einen Abstand zwischen Unterseite des Filtermittels und dem Schalenboden bereitzustellen. Damit wird eine Drainage unterhalb des mattenförmigen Filtermittels bereitgestellt, sodass eine schnelle Entfeuchtung und Trocknung des Filtermittels stattfinden kann. Insgesamt wird eine Keimbildung im Filtermittel verhindert bzw. zumindest verlangsamt.

Als zweckmäßig haben sich hierzu im oder am Boden der Auffangschale angebrachte oder angeformte Erhebungen erwiesen, bevorzugt gerundete, konvexe oder kegelstumpfförmige Ausprägungen bzw. Anformungen. Auf diesen Erhebungen liegt die Unterseite des Filtermittels auf, sodass diese Funktion der Abstandsmittel bereitstellen. Die Erhebungen oder einstückige Ausprägungen haben den Vorteil, dass sie den Flüssigkeitsstrom unterhalb der Filtermatte kaum beeinträchtigen. Ferner beeinträchtigen sie nicht das manuelle Abspülen der Auffangschale.

In einer anderen Weiterbildung des Abstandsmittels dient ein in die Auffangschale eingelegtes Gitter bzw. Gitterrahmen, der fest eingebracht ist oder herausgenommen werden kann. Auf das Gitter kann das Filtermittel aufgelegt werden, wobei das Gitter so bemessen ist, dass das flexible Filtermittel nicht den Boden berührt.

In einer insgesamt zweckmäßigen Ausführung ist das Filtermittel so dimensioniert, dass es die Fläche der Eingangsöffnung der Auffangschale nahezu vollständig bis vollständig ausfüllt. Bevorzugt ist die Schale oben offen ausgebildet, sodass das Filtermittel die gesamte Oberfläche der Schale überdeckt. Diese Dimensionierung kann für alle Ausführungen so verwendet werden. Damit werden abfallende Tropfen aus verschiedenen Bereichen im Geräteinneren sicher in der Auffangschale gefiltert. Ferner wird auch Staub, der beispielsweise beim Mahlen von Kaffeebohnen entsteht, im Filtermittel sicher aufgefangen und dort gebunden. Eine Weiterleitung des Staubes zur Auslassöffnung findet aufgrund der Filterung nicht statt.

Das Filtermittel besitzt bevorzugt eine Porengröße zum Zurückhalten von Sedimenten mit einer Korngröße im Durchmesser größer 30 Mikrometer (um). In einer vorteilhaften Ausführung wird als Filtermittel ein Geotextil oder Geovlies verwendet, das in sehr kostengünstig bereitgestellt wird und die gewünschten Filtereigenschaften erfüllt.

Ein Ausführungsbeispiel der Erfindung ist in den Zeichnungen rein schematisch dargestellt und wird nachfolgend näher beschrieben. Es zeigen
- Fig. 1:: einen Heißgetränkebereiter in einer teilweise schematischen Schnittdarstellung und
- Fig. 2 bis 4:: die Ablaufvorrichtung in verschiedenen, schematischen Ansichten und Ausführungen.

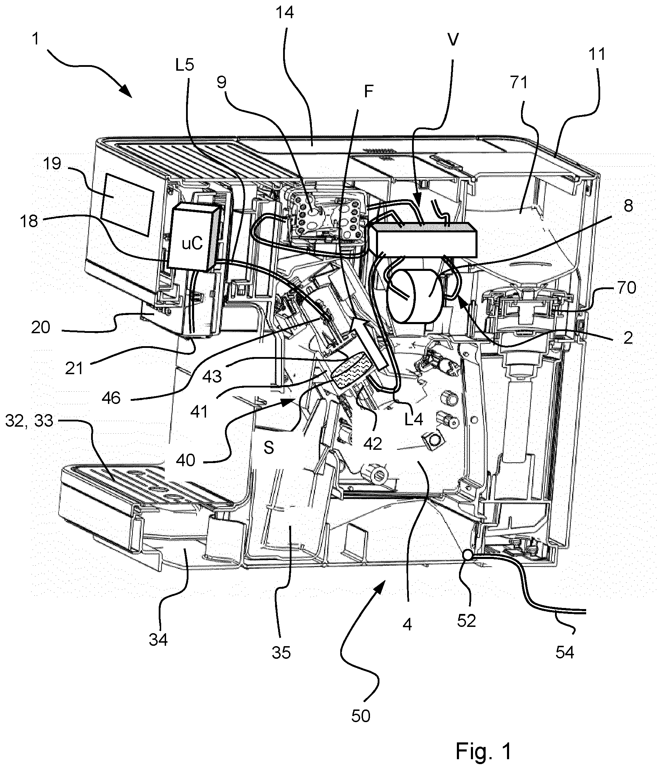

Die Fig.1 zeigt am Beispiel eines als Standgerät ausgebildeten Heißgetränkebereiter 1 mit allen relevanten Komponenten für die Zubereitung eines Heißgetränks. Der Getränkebereiter 1 umfasst unter anderem ein Gehäuse 11, in dem der Vorratsbehälter 71 für Kaffeebohnen mit darunter angebrachtem Mahlwerk 70 mit Motor, den Wasserbehälter 14 sowie die Möglichkeit, der Unterbringung des Strömungsleitungssystems 2. Im Frontbereich des Heißgetränkebereiter 1 verfügt dieser über einen höhenbeweglichen Auslass 20, in dem mehrere Entnahmeeinrichtungen, hier Auslassdüsen 21 untergebracht sind. Die Entnahmeeinrichtung 21 stellt eine Ausgabeleitung oder Ausgabedüse 21 zur Abgabe von Kaffeegetränken dar. Eine Brüheinheit 40 mit einer Brühkammer 41 im Inneren des Gerätes 1 dient zur Zubereitung des Getränkes, wobei in die Brühkammer 41 das Kaffeepulver eingebracht und anschließend mit heißem Wasser durchflutet wird, sodass zur Ausgabeleitung und durch die Ausgabedüse 21 das fertige Kaffeegetränk ausgegeben wird. Bei dieser Ausführung sind die Ausgabedüsen 21 in der Höhe verschiebbar angeordnet, so dass sie der Höhe eines auf der Abstellfläche 33 abgestellten Trinkgefäßes angepasst werden kann, ohne dass bei der Abgabe des Getränkes ein Verspritzen erfolgt. Den oberen Abschluss der Abstellfläche 33 bildet ein Abtropfblech 32, das mit Öffnungen und Schlitzen versehen ist, um Flüssigkeitsreste in einer unterhalb des Abtropfbleches 32 vorhandenen Auffangschale 34 abzuführen. Ferner umfasst der Heißgetränkebereiter 1 einen Tresterbehälter 35, in den die aufgebrauchte Substanz, beispielsweise Kaffeekuchen, nach Vollendung der Getränkezubereitung hineingeworfen wird. Das Gerät 1 umfasst ferner eine Steuereinrichtung 18, die dazu eingerichtet ist, die einzelnen Funktionsbaugruppen, wie Pumpen 8, Ventile V und Heizeinrichtung 9 und Mahlwerk 70, soweit vorhanden, zu steuern, wie es für die Zubereitung des jeweils ausgewählten Getränkes notwendig ist. Die Steuereinrichtung 18, die als Mikrocontroller uC mit einem zugeordneten Speicher ausgeführt ist, ist in dieser Ausführung ferner dazu eingerichtet, die Ventile V des Strömungsleitungssystems 2 so anzusteuern, dass das heiße Wasser durch die Brühkammer 41, gepumpt wird.

Für alle hier erläuterten Ausführungen ist die Brühkammer 41 zylindrisch ausgebildet, wobei hier die Brühsubstanz S zum Aufbrühen eingebracht wird. Die obere Stirnseite wird nach dem Befüllen mit dem Brühsieb 43 verschlossen, wobei mit dem Brühsieb 43 die Substanz S in der Brühkammer 41 verpresst werden. Das heiße Wasser wird in den Einlass 42 an der bodenseitigen Stirnseite eingelassen, wobei die Brühflüssigkeit durch das Brühsieb 43 und bevorzugt durch ein nachgeschaltetes Druckventil 46 zur Auslassdüse 21 gelangt.

Außenseitig an der Frontwand des Gehäuses 11 ist die Bedien- und Anzeigevorrichtung 19 angeordnet, in diesem Beispiel ist sie mit Touchflächen und einem Display oder als Berührbildschirm ausgebildet, um Eingaben bezüglich der Getränkeauswahl und zusätzliche Einstellungen hinsichtlich Wassermenge, Geschmack Stärke oder Bohnensorte bereitzustellen. Die Bedien- und Anzeigevorrichtung 19 steht dabei datentechnisch mit der Steuereinrichtung 18 bzw. mit dem dort vorhandenem Mikroprozessor uC in Verbindung.

Die Steuereinrichtung 18 mit einem Mikrocontroller uC und einer Speichereinrichtung MEM dient zur Durchführung einer Getränkezubereitung, wobei hierbei die Aktivierung der Heizeinrichtung 9, der Ventile der Ventilvorrichtung V sowie der Pumpe 8, der Brühkammer 40 und bedarfsweise weiteren Komponenten, wie einem Mahlwerk 70 durch entsprechende Signalverbindungen (nicht dargestellt) erfolgt.

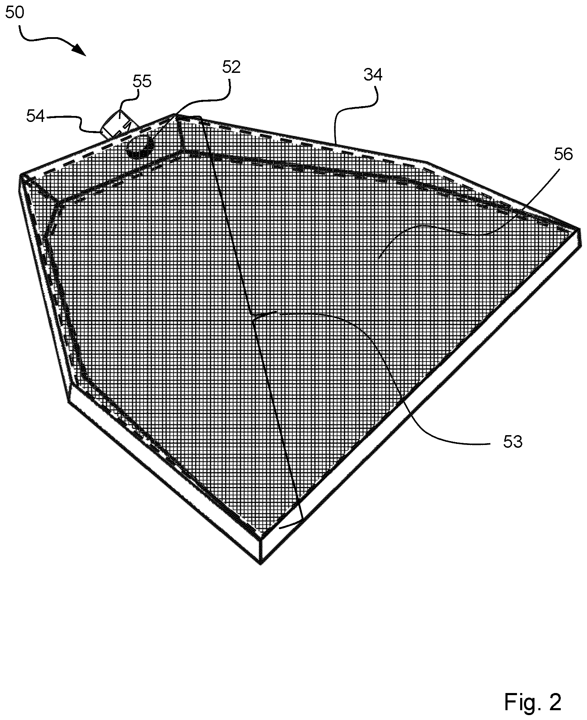

Fig. 2 zeigt die Ablassvorrichtung 50 in einer schematischen Detailansicht. Die Auffangschale 34 als zentrales Funktionsbauteil umfasst einen Schalenboden 51, der mit einem Gefälle zur Ablassöffnung 52 ausgebildet ist. Das Gefälle stellt die Funktion eines Trichters bereit, um das in der Schale 34 eintreffende Abwasser gezielt zur Auslassöffnung 52 zu leiten. Die Schale 34 ist oben offen ausgeführt und stellt die Einlassöffnung 53 für das eintreffende Abwasser AW bereit. In der Darstellung ist der diagonale Durchmesser der Einlassöffnung 53 hervorgehoben, um den maximal großen Querschnitt zu verdeutlichen. In der Schale 34 ist das Filtermittel 56 eingesetzt. In dem dargestellten Beispiel füllt das Filtermittel 56 das Innere der Schale 34 vollständig oder zumindest nahezu vollständig aus. Der Ablassöffnung 52 ist der Ablaufschlauch 54 nachgeschaltet, der zum Anschluss an einen Abwasserkanal vorgesehen ist. In der Auslassöffnung oder unmittelbar dahinter kann in Rückschlagventil 55 angeordnet sein, um das Ausströmen von Abwasserresten zu verhindern, wenn die Auffangschale 34 aus dem Gerätegehäuse 11 herausgezogen wird. Die genannten Komponenten und ihre Anordnung sind größtenteils auch in der Fig. 1 ersichtlich.

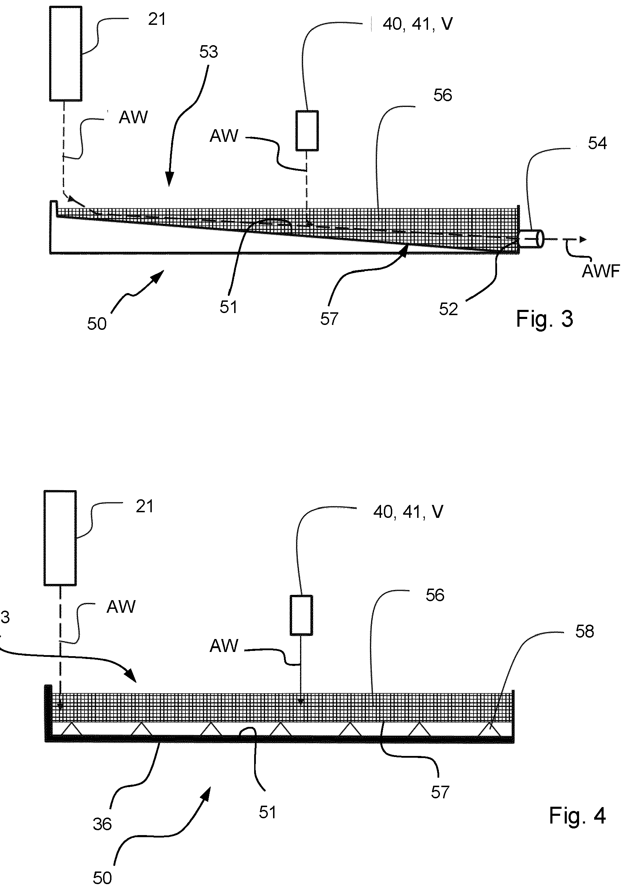

Fig. 3 zeigt die Ablaufvorrichtung 50 in einer skizzierten Seitenansicht. Die Auffangschale 34 besitzt einen Boden 51 mit einem Gefälle zur Auslassöffnung 52. Die Auslassöffnung 52 befindet sich dabei bevorzug an der tiefsten Stelle in der Auffangschale 34, was in der Skizze nicht so deutlich dargestellt ist. An der Auslassöffnung 52 ist die Leitung 54 angeschlossen, die das gefilterte Abwasser AWF nach außen führt und an einen Abwasserkanal angeschlossen werden kann. Die Einlassöffnung 53 ist mit dem Filtermittel 56 ausgefüllt. Als mögliche Verursacher für Abwasser AW kommt der Auslass 20 bzw. die Auslassdüse 21 für das Getränk und die Brüheinheit 40 in Frage. Weitere Verursacher, wie Ablassleitungen oder Ventile V zum Ablassen von Spülflüssigkeit oder Reinigerlösung kommen auch in Frage. Das Abwasser AW aus diesen Verursachern gelangt auf oder in das Filtermittel 56, das die Einlassöffnung 53 vollständig abdeckt. In dem gezeigten Beispiel ist das Filtermittel 56 als Block geformt und füllt den Innenraum der Schale 36 vollständig aus. Die Unterseite 57 des Filterblocks 56 folgt dabei der Kontur des Schalenbodens 51.

Fig. 4 zeigt die Ablaufvorrichtung 50 in einer skizzierten Seitenansicht. In dem gezeigten Beispiel besitzt die Auffangschalke keine Auslassöffnung und dient zum Sammeln von Abwasser AW. Das Abwasser AW ist dabei von Sedimenten befreit, wobei die Sedimente als Körner im Filtermittel 56 verbleiben und dort trocknen, weil sie sich nicht mehr im Wasser befinden. Die Auffangschale 34 kann einen Boden 51 mit einem Gefälle zur Auslassöffnung 52 (Fig. 3) besitzen, wenn eine Auslassöffnung vorhanden ist. Die Auslassöffnung 52 befindet sich dabei bevorzugt an der tiefsten Stelle in der Auffangschale 34, was in der Skizze nicht so deutlich dargestellt ist. An der Auslassöffnung 52 ist die Leitung 54 angeschlossen, die das gefilterte Abwasser AWF nach außen führt und an einen Abwasserkanal angeschlossen werden kann (Fig. 3). Die Einlassöffnung 53 ist mit dem Filtermittel 56 ausgefüllt. Als mögliche Verursacher für Abwasser AW kommt der Auslass 20 bzw. die Auslassdüse 21 für das Getränk und die Brüheinheit 40 in Frage. Weitere Verursacher, wie Ablassleitungen zum Ablassen von Spülflüssigkeit oder Reinigerlösung kommen auch in Frage. Das Abwasser AW aus diesen Verursachern gelangt auf oder in das Filtermittel 56, das die Einlassöffnung 53 vollständig abdeckt. In dem gezeigten Beispiel ist das Filtermittel 56 als Block geformt und füllt den Innenraum der Schale 36 so aus, dass ein Abstand zum Schalenboden 51 besteht.

Die Unterseite 57 des Filterblocks 56 liegt hierbei auf Abstandsmitteln 58 auf, die auf dem Schalenboden 51 angebracht sind. Die Abstandsmittel 58 sind bevorzugt als Ausformungen oder Ausprägungen aus dem Schalenboden 51 ausgebildet. Dargestellt sind hier kegelförmige Ausprägungen, konvexe oder abgerundete Formen sind vorteilhaft, weil sie leichter zu reinigen sind.

## Patentansprüche

1. Heißgetränkebereiter (1) mit einem Strömungsleitungssystem (2) mit
- einer Wasserquelle (14)
- einer Brüheinheit (40), wobei die Brüheinheit (40) eine Brühkammer (41) zur Aufnahme von aufzubrühender Brühsubstanz (S1) und einer Einlassleitung zum Einlassen von Brühwasser in die Brühkammer (41),
- eine Heizeinrichtung (9) zum Erhitzen des der Brühkammer (41) zugeführten Wassers
- eine Pumpe (8), die dazu ausgebildet ist, das Wasser aus der Wasserquelle (14) zur Brühkammer (41) zu fördern,
- eine Steuereinrichtung (18) zur Aktivierung und Deaktivierung der Heizeinrichtung (9) und der Pumpe (9) zur Zubereitung eines ausgewählten Getränks,
- einer Ablaufvorrichtung (50), umfassend
- eine Auffangschale (34) zum Auffangen von Flüssigkeit (AW), welche eine Einlassöffnung (53) umfasst, **gekennzeichnet durch**
- ein Filtermittel (56), welches ein in der Auffangschale (34) angebrachtes Vlies oder mehrlagiges Gewebe ist und
- Abstandsmittel (58) zur Auflage des Filtermittels (56) in der Auffangschale, um einen Abstand zwischen Unterseite (57) des Filtermittels (56) und dem Boden (51) der Auffangschale (34) bereitzustellen, wobei der Boden (51) der Auffangschale (34) mit Erhebungen (58), bevorzugt gerundete, konvexe oder kegelstumpfförmige Ausprägungen bzw. Anformungen, versehen ist zur Bereitstellung der Abstandsmittel (58).

2. Heißgetränkebereiter nach Anspruch 1, ferner umfassend eine in der Auffangschale (34) angeordnete Auslassöffnung (52) zum Abführen der aufgefangenen Flüssigkeit (AW).

3. Heißgetränkebereiter nach Anspruch 1 oder 2,
**dadurch gekennzeichnet,**
**dass** das Filtermittel (56) eine Dicke aufweist, die etwa der Tiefe der Auffangschale (34) entspricht.

4. Heißgetränkebereiter nach einem der Ansprüche 1 bis 3,
**dadurch gekennzeichnet,**
**dass** die Auffangschale (34) einen Boden (51) mit Gefälle zur Auslassöffnung (52) umfasst.

5. Heißgetränkebereiter nach Anspruch 1,
**dadurch gekennzeichnet,**
**dass** das Abstandsmittel (58) ein in der Auffangscahle (34) eingelegter oder angebrachter Gitterrahmen ist.

6. Heißgetränkebereiter nach einem der Ansprüche 1 bis 5,
**dadurch gekennzeichnet,**
**dass** das Filtermittel (56) die Fläche der Eingangsöffnung (53) der Auffangschale (34) nahezu vollständig bis vollständig ausfüllt.

7. Heißgetränkebereiter nach einem der Ansprüche 1 bis 6
**dadurch gekennzeichnet,**
**dass** das Filtermittel (56) Porengröße zum Zurückhalten von Sedimenten mit einer Korngröße im Durchmesser größer 30 Mikrometer besitzt.

8. Heißgetränkebereiter nach einem der Ansprüche 1 bis 7
**dadurch gekennzeichnet,**
**dass** das Filtermittel (56) Geotextil umfasst oder aus einem Geotextil besteht.

## Claims

1. Hot beverage maker (1) comprising a flow line system (2) having
- a water source (14)
- a brewing unit (40), the brewing unit (40) having a brewing chamber (41) for receiving brewing material (S1) to be brewed and an inlet line for introducing brewing water into the brewing chamber (41),
- a heating device (9) for heating the water supplied to the brewing chamber (41)
- a pump (8) designed to convey the water from the water source (14) to the brewing chamber (41),
- a control device (18) for activating and deactivating the heating device (9) and the pump (9) for preparing a selected beverage,
- a discharge mechanism (50) comprising
- a collecting tray (34) for collecting liquid (AW), which comprises an inlet opening (53),
**characterised by**
- a filter medium (56), which is a fleece or multi-layer fabric attached in the collecting tray (34) and
- spacing means (58) for supporting the filter medium (56) in the collecting tray in order to provide a distance between the underside (57) of the filter medium (56) and the base (51) of the collecting tray (34),
the base (51) of the collecting tray (34) being provided with elevations (58), preferably rounded, convex or frustoconical features or formations, for providing the spacing means (58).

2. Hot beverage maker according to claim 1, further comprising an outlet opening (52) arranged in the collecting tray (34) for discharging the collected liquid (AW).

3. Hot beverage maker according to either claim 1 or claim 2,
**characterised in that**
the filter medium (56) has a thickness which approximately corresponds to the depth of the collecting tray (34).

4. Hot beverage maker according to any of claims 1 to 3,
**characterised in that**
the collecting tray (34) comprises a base (51) having a gradient towards the outlet opening (52).

5. Hot beverage maker according to claim 1,
**characterised in that**
the spacing means (58) is a grid frame inserted or attached in the collecting tray (34).

6. Hot beverage maker according to any of claims 1 to 5,
**characterised in that**
the filter medium (56) almost completely to completely fills the area of the inlet opening (53) of the collecting tray (34).

7. Hot beverage maker according to any of claims 1 to 6,
**characterised in that**
the filter medium (56) has a pore size to retain sediments having a grain size greater than 30 micrometres in diameter.

8. Hot beverage maker according to any of claims 1 to 7,
**characterised in that**
the filter medium (56) comprises geotextile or consists of a geotextile.

## Revendications

1. Préparateur de boissons chaudes (1) comportant un système de conduite d'écoulement (2), comportant
- une source d'eau (14),
- une unité d'infusion (40), dans lequel l'unité d'infusion (40) a une chambre d'infusion (41) permettant de recevoir une substance d'infusion à infuser (S1) et une conduite d'admission permettant d'admettre de l'eau d'infusion dans la chambre d'infusion (41),
- un appareil de chauffage (9) permettant de chauffer l'eau acheminée à la chambre d'infusion (41),
- une pompe (8) qui est conçue pour transporter l'eau depuis la source (14) jusqu'à la chambre d'infusion (41),
- un appareil de commande (18) permettant d'activer et de désactiver l'appareil de chauffage (9) et la pompe (9) pour la préparation d'une boisson sélectionnée,
- un dispositif d'évacuation (50), comprenant
- un bac collecteur (34) pour la collecte de liquide (AW) qui comprend une ouverture d'admission (53),
**caractérisé par**
- un moyen de filtrage (56) qui est un non-tissé ou un tissu multicouche placé dans le bac collecteur (34) et
- un moyen d'espacement (58) permettant de supporter le moyen de filtrage (56) dans le bac collecteur afin de fournir un espacement entre la face inférieure (57) du moyen de filtrage (56) et le fond (51) du bac collecteur (34), dans lequel le fond (51) du bac collecteur (34) est pourvu d'élévations (58), de préférence d'empreintes ou de bossages arrondis, convexes ou tronconiques, pour la fourniture du moyen d'espacement (58).

2. Préparateur de boissons chaudes selon la revendication 1, comprenant en outre une ouverture de sortie (52) disposée dans le bac collecteur (34) et permettant d'évacuer le liquide (AW) collecté.

3. Préparateur de boissons chaudes selon la revendication 1 ou 2,
**caractérisé en ce**
**que** le moyen de filtrage (56) présente une épaisseur qui correspond à peu près à la profondeur du bac collecteur (34).

4. Préparateur de boissons chaudes selon l'une des revendications 1 à 3,
**caractérisé en ce**
**que** le bac collecteur (34) comprend un fond (51) comportant une pente vers l'ouverture de sortie (52).

5. Préparateur de boissons chaudes selon la revendication 1,
**caractérisé en ce**
**que** le moyen d'espacement (58) est un cadre en treillis inséré ou placé dans le bac collecteur (34).

6. Préparateur de boissons chaudes selon l'une des revendications 1 à 5,
**caractérisé en ce**
**que** le moyen de filtrage (56) remplit presque entièrement à entièrement la surface de l'ouverture d'entrée (53) du bac collecteur (34).

7. Préparateur de boissons selon l'une des revendications 1 à 6,
**caractérisé en ce**
**que** le moyen de filtrage (56) possède une taille de pores permettant de retenir des sédiments comportant une taille de grains d'un diamètre supérieur à 30 micromètres.

8. Préparateur de boissons selon l'une des revendications 1 à 7,
**caractérisé en ce**
**que** le moyen de filtrage (56) comprend un géotextile ou est constitué d'un géotextile.
